# EUROPÄISCHE PATENTSCHRIFT

(11) **EP 1 087 482 B1**
(45) Veröffentlichungstag und Bekanntmachung des Hinweises auf die Patenterteilung: **04.09.2002**
(21) Anmeldenummer: 00116698.2
(22) Anmeldetag: 02.08.2000
(51) Int. Cl.: H02B 1/40

(54) **Gehäusesystem**
Housing system
Système de boîtier

(30) Priorität: 22.09.1999 DE 29916705 U
(43) Veröffentlichungstag der Anmeldung: 28.03.2001
(73) Patentinhaber: Knürr-Mechanik für die Elektronik AG, D-81829 Munchen (DE)
(72) Erfinder: Flamme, Hans, 82008 Unterhaching (DE); Müller, Peter, 85655 Grosshelfendorf (DE); Knab, Josef, 94439 Rossbach (DE); Reinhart, Horst, 80469 München (DE)
(74) Vertreter: Heim, Hans-Karl, Dipl.-Ing.

(56) Entgegenhaltungen:
- EP-A- 0 143 718
- FR-A- 1 573 477

## Beschreibung

Die Erfindung betrifft ein Gehäusesystem, insbesondere für Wandgehäuse, gemäß dem Oberbegriff des Anspruchs 1.

Das Gehäusesystem ist insbesondere für den Einsatz in der Netzwerktechnik und zur Kabelverteilung vorgesehen und muss den vielfältigen Anforderungen, insbesondere in Bezug auf Montage- und Servicefreundlichkeit, Zugänglichkeit und Kabelmanagement, gerecht werden. Die Zugänglichkeit betrifft die Installation und den Service der einzubauenden Komponenten sowie eine Kabelführung, welche eine komplette Verdrahtung ohne Einfädeln ermöglicht.

Aus der DE 198 11 777 C1 ist ein Kleingehäuse für den Wandanbau bekannt, welches aus einer Rückwand, einem Deckenund Bodenteil und aus einer Abdeckung mit einer Frontplatte und zwei Seitenteilen besteht. Die Seitenteile werden in längsseitigen Aufnahmen der Rückwand aufgenommen, und wenigstens ein Seitenteil besteht aus zwei Teilstücken, welche miteinander über ein Scharnier verbunden sind, so dass eine seitliche Aufschwenkung eines Bereichs der Abdeckung möglich ist. Eine Fixierung der dreiseitigen Abdeckung erfolgt mit Befestigungsschrauben an den Längsstegen der rückwandseitigen Grundplatte, und eine Abstützung und Versteifung erfolgt über Dichtränder, welche an dem Decken- und Bodenteil vorgesehen sind.

Das bekannte Wandgehäuse ist aufgrund der erforderlichen Befestigungselemente in der Grundplatte und der Abdeckung sowie aufgrund des vorgesehenen Scharniers in einem Seitenteil der Abdeckung relativ aufwendig in der Herstellung.

Aus der FR-A 1 573 477 ist ein Gehäuse mit einer Rückwand, einem Vorderrahmen, Eckwinkeln, Stegen und Seitenwänden sowie einer Fronttür bekannt. Um elektrische Geräte in dem Gehäuse in einer frei wählbaren räumlichen Lage unterbringen zu können, sind zwei vertikale Lochleisten an dem Gehäuse oder an einem Gehäusegestell in dessen Tiefenerstrekkung hintereinanderliegend angeordnet und eine Zwischenleiste mit Lochreihen an den zwei vertikalen Lochleisten befestigt. An der Zwischenleiste ist in senkrechter Stellung ein Geräteträger für die elektrischen Geräte befestigt. Der Geräteträger kann an der Zwischenleiste in verschiedenen Stellungen befestigt werden, wodurch eine Anpassung an Geräte mit verschiedenen Einbautiefen möglich ist. Außerdem kann eine Montageeinheit aus Zwischenleiste, Geräteträger und daran befestigten Geräten an den zwei vertikalen Lochleisten fixiert werden. Die Zwischenleiste kann Ansätze aufweisen, welche in Durchbrüche der hinteren Leiste eingreift. An ihrem vorderen Ende ist eine Schraubbefestigung mit der vorderen Lochleiste vorgesehen.

Ein Gehäusesystem für Wandgehäuse ist aus dem VERO-Katalog "apw enclosure products - IMRAK und Netzwerklösungen" von 01/1999 bekannt. Das bekannte Wandgehäuse weist ein Grundgestell mit einer Rückwand, zwei oberen und zwei unteren Einbaukonsolen und zwei frontseitigen Vertikalprofilen auf, welche einen Aufnahmeraum für elektrische Geräte, Baugruppen und Komponenten umgeben und mit Verkleidungsteilen versehen werden. Als Verkleidungsteile werden ein Deckenteil, ein Bodenteil, zwei Seitenwände und eine Tür abnehmbar angeordnet. Jeweils die obere und untere Einbaukonsole sind über einen vertikal ausgerichteten Verbindungsholm miteinander verbunden und werden im Bereich des Verbindungsholmes mit Befestigungsschrauben an der Rückwand befestigt. Diese Befestigung erfordert eine relativ hohe Maßhaltigkeit der C-förmigen Einbaukonsolenkonstruktion und kann sich nachteilig auf die Montage des Wandgehäuses und auch auf die Zugänglichkeit beim Einbau der Geräte und bei der Verkabelung auswirken.

Der Erfindung liegt die **Aufgabe** zugrunde, ein Gehäusesystem zu schaffen, welches eine außerordentlich hohe Montage- und Kundenfreundlichkeit aufweist, insbesondere von einer Person montiert werden kann und eine sehr gute Zugänglichkeit zur Installation und Verkabelung ermöglicht und darüber hinaus eine hohe Sicherheit gegen unberechtigtes Öffnen gewährleistet.

Erfindungsgemäß wird die Aufgabe durch die Merkmale des Anspruchs 1 gelöst. Zweckmäßige und vorteilhafte Ausgestaltungen sind Merkmale der Unteransprüche und in der Figurenbeschreibung enthalten.

Eine Grundidee der Erfindung besteht darin, die Einbaukonsolen, welche mit einer Rückwand und wenigstens zwei frontseitigen Vertikalprofilen ein Grundgestell bilden, einzeln unmittelbar an der Rückwand zu befestigen.

Erfindungsgemäß sind die Rückwand und die Einbaukonsolen derart ausgebildet, dass jede Einbaukonsole wenigstens ein Befestigungselement zum Einhängen in wenigstens eine Aufnahmeöffnung der Rückwand aufweist und zunächst in die bevorzugt komplementär ausgebildete Aufnahmeöffnung der Rückwand eingehängt und mit Hilfe eines Befestigungsmittels, insbesondere einer Befestigungsschraube, welche in einer Befestigungsöffnung der Rückwand und in einer Öffnung der Einbaukonsole geführt ist, nachfolgend gesichert werden kann. Die erfindungsgemäße einhängbare und nachfolgend vorteilhafterweise verschraubbare Befestigung der Einbaukonsolen ist durch eine Person durchzuführen und damit besonders montage- und kundenfreundlich.

Fertigungstechnische Vorteile sind durch eine identische Ausbildung der Einbaukonsolen gegeben, welche vorzugsweise als U-Profile ausgebildet sind und jeweils das Befestigungselement an einem rückseitigen Befestigungsbereich aufweisen. Das Befestigungselement kann beispielsweise als Haken oder Nase ausgebildet sein, welches ein Einhängen oder auch ein Hintergreifen mit Festklemmen oder Verrasten ermöglicht. Auf diese Weise ist eine Halterung jeder Einbaukonsole bis zum Festschrauben gewährleistet.

Die identischen Einbaukonsolen werden derart befestigt, dass die Öffnungen der U-förmigen Einbaukonsolen einander zugekehrt sind. Dabei sind wenigstens die vertikalen Schenkel der U-förmigen Einbaukonsolen mit Lochreihen versehen, welche der Aufnahme von Befestigungsmitteln zum Sichern der Vertikalprofile und/oder der Verkleidungsteile des Wandgehäuses dienen.

Es ist vorteilhaft, die Einbaukonsolen im rückseitigen Befestigungsbereich stabiler, beispielsweise mit höheren vertikalen Schenkeln zu versehen, während ein frontseitiger Aufnahmebereich zur Aufnahme des Deckenteils bzw. des Bodenteils ausgebildet ist und eine geringere Höhe aufweist. Insgesamt ergibt sich eine stufenförmige Ausbildung der Einbaukonsolen, wodurch eine stabile und sichere Befestigung an der Rückwand und gleichzeitig eine einfache und rasche Befestigung der Vertikalprofile und insbesondere des Decken- und Bodenteils ermöglicht wird.

Neben der montagefreundlichen Ausbildung besteht ein weiterer Vorteil des Gehäusesystems darin, dass die Vertikalprofile für 19"-Einbauten, metrische Einbauten oder ETSI-Einbauten ausgebildet und an den U-förmigen Einbaukonsolen fixiert werden können. Bei einem 19"-Profil kann der Einbau auf den Innenseiten der Innenschenkel der Einbaukonsolen erfolgen, während ein metrisches Vertikalprofil an der Innenseite des äußeren Schenkels der U-förmigen Einbaukonsolen befestigt werden kann. Grundsätzlich besteht die Möglichkeit, auch nahe der Rückwand jeweils ein weiteres Vertikalprofil an der oberen und unteren Einbaukonsole zu befestigen. Es können dann Auszugsschienen, zusätzliche Tiefenprofile und Einbauten an dem vorderen und rückseitigen Vertikalprofil befestigt werden.

Die zum Einhängen der wenigstens vier Einbaukonsolen vorgesehene Rückwand ist in einer besonders vorteilhaften Ausbildung als eine Grundplatte ausgebildet und mit vertikal verlaufenden Verstärkungssicken versehen. Die Verstärkungssicken sind nahe den vertikalen Kantenbereiche ausgebildet und zum Aufnahmeraum gerichtet und weisen, insbesondere in einem oberen und unteren Bereich, jeweils wenigstens eine Aufnahmeöffnung für die einhängbaren Einbaukonsolen und eine Bohrung zum Festschrauben der Einbaukonsolen auf.

Durch die Verstärkungssicken, welche im Querschnitt etwa trapezförmig ausgebildet sind, wird nicht nur das vorteilhafte Einhängen der Einbaukonsolen gewährleistet, sondern auch eine hohe Stabilität der Grundplatte erreicht.

Die Befestigung der Rückwand erfolgt zweckmäßigerweise über Schraubbefestigungen, wobei wenigstens vier Prägungen zur Aufnahme der Schraubköpfe ausgebildet sind. Dabei ist es vorteilhaft, dass die nach außen gerichteten Prägungen mit den vertikalen Kantenbereichen fluchten und etwa auf gleichem Niveau liegen, so dass eine stabile Rückwandlagerung vorhanden ist.

Die rechtwinklig nach vorn abstehenden vier Einbaukonsolen, die Rückwand und die Vertikalprofile bilden das Grundgestell des erfindungsgemäßen Gehäusesystems und gewährleisten eine außerordentlich gute Zugänglichkeit für den Einbau von Geräten, passiven und aktiven Komponenten bei voller Zugänglichkeit der Anschlußkomponenten. Insbesondere die Verkabelung ist ohne Einfädeln möglich und gestaltet sich außerordentlich kundenfreundlich.

Die Verkleidungsteile können erst nach dem Einbau der Geräte und Komponenten und nach der Verkabelung angebracht werden. Es ist von besonderem Vorteil, dass alle Verkleidungsteile außerordentlich rasch und von einer Person angebracht und befestigt und bei Bedarf jederzeit abgenommen werden können.

Die Verkleidungsteile und die Rückwand des Grundgestells sind derart ausgebildet, dass eine dichte Anlage und Halterung der Verkleidungsteile gewährleistet ist. An der Rückwand sind horizontal und vertikal verlaufende Stege als nahezu rechtwinklige und zum Aufnahmeraum gerichtete Abbiegungen ausgebildet. Der obere und untere horizontale Steg der Rückwand dient gleichzeitig der Halterung und Anlage des Deckenteils bzw. Bodenteils. Das Deckenteil und das im Wesentlichen identisch ausgebildete Bodenteil weisen zu diesem Zweck an ihrem rückseitigen Kantenbereich wenigstens zwei Befestigungselemente zum Aufschieben oder Aufstecken auf den jeweiligen Steg der Rückwand auf.

Zweckmäßigerweise ist der rückseitige Kantenbereich des Decken- und Bodenteils außerdem mit wenigstens einer Ausnehmung für Kabelstränge versehen, welche auch an der Wand verlaufen können. Es ist sinnvoll, die Ausnehmung im Dekken- und/oder Bodenteil als Bürstenausnehmung auszubilden.

Decken- und Bodenteil weisen in einem frontseitigen Kantenbereich und im Bereich der Seitenkanten Mehrfachabwinklungen auf, wobei die Kantenbereiche als horizontale, nach innen gerichtete U-förmige Profile ausgebildet sind. Ein frontseitiger Kantenbereich ist dabei komplementär zu dem stirnseitigen Aufnahmebereich der Einbaukonsolen dimensioniert und ermöglicht auf diese Weise ein Aufschieben des Decken- und Bodenteils auf die Einbaukonsole und eine Halterung. Das auf einen Rückwandsteg und einen stirnseitigen Aufnahmebereich der Einbaukonsole aufgeschobene oder auch eingeklemmte Deckenteil bzw. Bodenteil kann anschließend mittels Befestigungsschrauben an den Einbaukonsolen gesichert werden. Diese Sicherung erfolgt vom Innen- bzw. Aufnahmeraum her.

Nach Anbringen des Decken- und Bodenteils können die Seitenteile befestigt werden. Zweckmäßigerweise sind die Seitenteile in einem oberen und unteren Kantenbereich mit einer rechtwinkligen Abwinklung und in einem frontseitigen vertikalen Kantenbereich mit einer U-förmigen Abwinklung versehen. Die Seitenwände liegen damit im Bereich ihrer rückseitigen Kanten an den vertikalen Kantenbereichen der Rückwand und mit dem oberen und unteren horizontalen Kantenbereich an dem U-förmigen Kantenbereich des Deckenteils bzw. Bodenteils an. Eine Verschraubung der Seitenwände kann ebenfalls vom Aufnahmeraum her erfolgen.

Eine frontseitige Tür kann als Sicht- oder Stahltür ausgebildet sein. In einer besonders vorteilhaften Ausbildung wird die Tür über zwei Bolzen angelenkt, welche im eingebauten Zustand nach oben und unten überstehen und in komplementäre Öffnungen des Decken- und Bodenteils eingreifen. Die Bolzen können in einer besonders vorteilhaften Anordnung in Langlöchern, welche von der Innenseite der Tür zugänglich sind, verschiebbar gelagert und arretierbar sein. Es ist daher möglich, die Tür mit einem z.B. in Mittelstellung gehaltenen, unteren Bolzen in die untere Öffnung als unteres Scharnierauge einzusetzen und den oberen Scharnierbolzen nach Anordnung der Tür in Einbaustellung in die obere Öffnung bzw. in das obere Scharnierauge zu verschieben und in dieser Position zu sichern.

Es ist vorteilhaft, die Tür zumindest an beiden Längsseiten mit etwa U-förmigen Profilen als Kantenbereiche zu versehen. In diesen U-förmigen Kantenbereichen können die Scharnierbolzen einerseits und ein Schloss auf der gegenüberliegenden Seite angeordnet werden.

Das erfindungsgemäße Gehäusesystem zeichnet sich durch geringe Fertigungskosten und eine außerordentlich kostengünstige Montage aus. Ein Wandgehäuse kann in einer Flachpakkung versandt und aufgrund der selbsterklärenden Funktion der einzelnen Elemente schnell und insbesondere von einer Person montiert werden. Neben der Montagefreundlichkeit ist die außerordentlich gute Zugänglichkeit ohne jede Einschränkung hervorzuheben, welche eine komplette Verdrahtung ohne Einfädeln der Kabel ermöglicht. Das stabile und variable Grundgestell ermöglicht die Aufnahme unterschiedlicher Geräte und Baugruppen und gewährleistet gleichzeitig eine hohe Servicefreundlichkeit. Die von innen gesicherten Verkleidungsteile lassen von außen keine Befestigung erkennen. Die Einbauten sind damit vor einem unbefugten Zugriff geschützt. Erst nach Öffnung der vorzugsweise verschließbaren Tür sind die Befestigungsmittel zugänglich und die Verkleidungsteile können nacheinander entfernt werden.

Die Erfindung wird nachstehend anhand einer Zeichnung weiter erläutert; in dieser zeigen in einer stark schematisierten Darstellung
- Fig. 1: ein Grundgestell des erfindungsgemäßen Gehäusesystems in einer Explosionsdarstellung und
- Fig. 2: Verkleidungsteile des erfindungsgemäßen Gehäusesystems vor dem Anbau an das Grundgestell nach Figur 1.

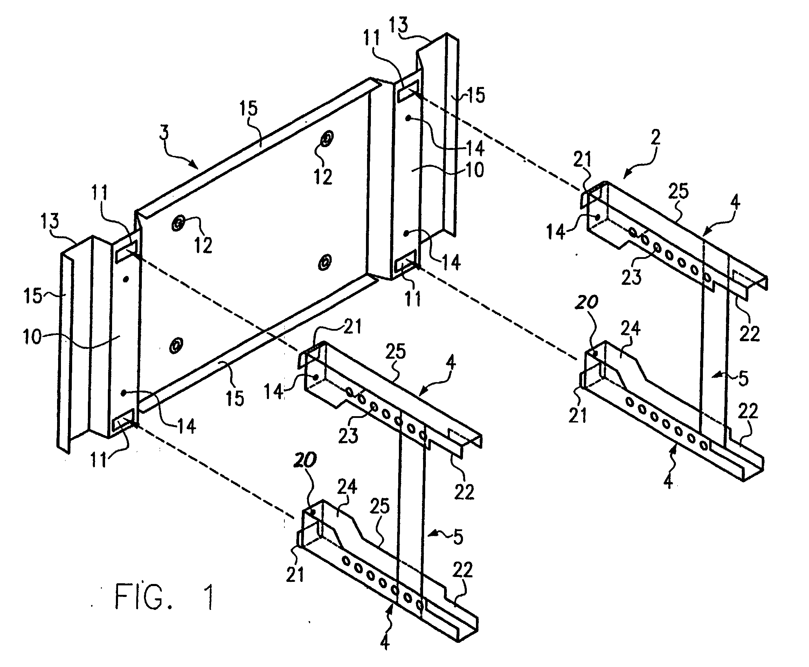

Das in Figur 1 dargestellte Grundgestell 2 des erfindungsgemäßen Gehäusesystems weist eine Rückwand 3 mit Verstärkungssicken 10 nahe vertikaler Kantenbereiche 13, vier Einbaukonsolen 4 und zwei Vertikalprofile 5 auf.

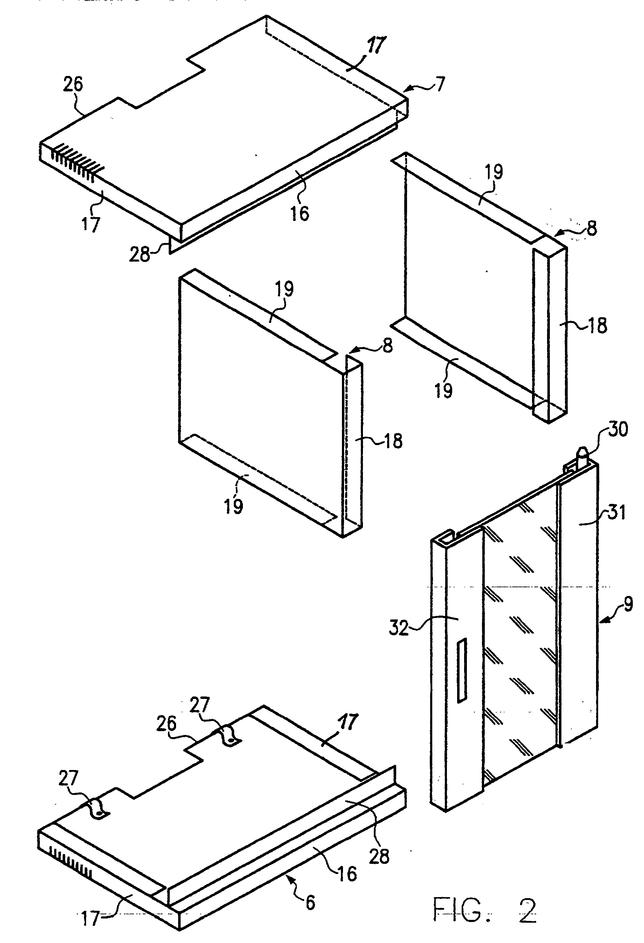

Die vier Einbaukonsolen 4 werden als zwei obere und zwei untere Tiefenholme an der Rückwand 3 im Bereich der Verstärkungssicken 10 befestigt, indem sie mit Befestigungselementen 21 an einem rückseitigen Befestigungsbereich 24 in Aufnahmeöffnungen 11, welche im Bereich der vertikal verlaufenden Verstärkungssicken 10 angeordnet sind, eingehängt und danach mit nur jeweils einem Befestigungselement (nicht dargestellt) in Befestigungsöffnungen 14 festgeschraubt werden. Rückwand 3, Einbaukonsolen 4 und Vertikalprofile 5 können ebenso wie die Verkleidungsteile 6 bis 9 gemäß Figur 2 in Stanz- und Biegeprozessen hergestellt werden.

Die Einbaukonsolen 4 sind als U-Profile mit Befestigungsbohrungen, insbesondere Lochreihen 23-in den Vertikalschenkeln, ausgebildet und ermöglichen eine Befestigung der Vertikalprofile 5, welche ebenfalls mit entsprechenden Befestigungsöffnungen, auch für die einzubauenden Komponenten (nicht dargestellt) versehen sind, an einer Innenseite des Innenschenkels oder Außenschenkels für 19"-, metrische oder ETSI-Einbauten.

Die Rückwand 3 ist in diesem Ausführungsbeispiel als eine etwa rechteckige Grundplatte mit den vertikalen Kantenbereichen 13 sowie endseitigen Stegen 15, welche horizontal und vertikal verlaufen, ausgebildet. Die Kantenbereiche 13 liegen in nahezu der gleichen Ebene wie Prägungen 12 für die Wandbefestigung der Rückwand 3 und damit des gesamten Gehäuses. Die Prägungen 12 sind in Richtung Wand (nicht dargestellt) gerichtet, so dass die Schraubenköpfe der Befestigungsmittel aufgegenommen werden.

Das Einhängen der einzelnen Einbaukonsolen 4 in die Aufnahmeöffnungen 11 im Bereich der Verstärkungssicken 10 ist durch strichlierte Linien angedeutet. Nach dem Einhängen erfolgt eine Verschraubung mit nicht dargestellten Befestigungselementen, welche durch eine entsprechende Öffnung 20 in der rückseitigen Stirnseite der Einbaukonsolen 4 und in die Befestigungsöffnung 14 unter- bzw. oberhalb der Aufnahmeöffnungen 11 geführt werden.

Die Einbaukonsolen 4 weisen einen rückseitigen Befestigungsbereich 24 und einen frontseitigen Aufnahmebereich 22 mit höheren bzw. niedrigeren U-Schenkeln im Vergleich zu einem mittleren Bereich 25 auf, in welchem insbesondere die Lochreihen 23 ausgebildet sind. Der rückseitige Befestigungsbereich 24 mit seiner größeren Höhe dient der stabilen und sicheren Anlage an der Rückwand 3 im Bereich der Verstärkungssicken 10. Der frontseitige Aufnahmebereich 22 dient der Aufnahme der decken- bzw. bodenseitigen Verkleidungsteile 6 bis 9.

Die Verkleidungsteile 6 bis 9 gehen aus Figur 2 hervor. Es sind ein Bodenteil 6, ein Deckenteil 7, zwei Seitenwände 8 und eine frontseitige Tür 9 vorgesehen. Decken- und Bodenteil 6, 7 sind im Wesentlichen identisch ausgebildet und weisen einen rückseitigen Kantenbereich 26 mit Befestigungselementen 27, zwei Seitenkantenbereiche 17, welche durch zwei nahezu rechtwinklige Abkantungen U-förmig ausgebildet sind, und einen frontseitigen Kantenbereich 16 auf.

Der frontseitige Kantenbereich 16 ist ebenfalls U-förmig abgekantet und zusätzlich mit einem endseitigen vertikalen Steg 28 versehen. Dieser vertikale Steg 28 dient insbesondere einer dichten Anlage der Tür 9. Der U-förmige Kantenbereich 16 ist komplementär zum Aufnahmebereich 22 der Einbaukonsolen 4 ausgebildet, und die Befestigungselemente 27, welche klammer- oder zangenartig an der Innenseite des Decken- und Bodenteils 7, 6 angeordnet werden können, dienen der Halterung an dem unteren bzw. oberen horizontalen Steg 15 der Rückwand 3. Boden- und Deckenteil 6, 7 können somit auf den jeweiligen Steg 15 der Rückwand 3 aufgeschoben werden. Eine frontseitige Halterung wird dadurch erreicht, dass das Boden- und Deckenteil 6, 7 mit dem frontseitigen Kantenbereich 16 auf den Aufnahmebereich 22 aufgeschoben und zumindest formschlüssig gehalten wird.

Nach der Befestigung des Boden- und Deckenteils 6, 7 werden die Seitenwände 8 angeordnet und befestigt. Die Seitenwände 8 sind mit einem rechtwinklig abgebogenen, oberen und unteren Katenbereich 19 und einem U-förmigen frontseitigen Kantenbereich 18 versehen und liegen damit an dem jeweiligen Kantenbereich des Bodenteils 6, Deckenteils 7 und der Tür 9 an. Eine Schraubbefestigung (nicht dargestellt) der Seitenwände kann von dem Aufnahmeraum her erfolgen und ist von außen nicht zugänglich.

Die Tür 9 ist im vorliegenden Ausführungsbeispiel als eine Glastür mit Metall-Längsprofilen 31, 32 ausgebildet. Im Bereich der Längsprofile 31, 32 sind ein Schloss 33 zum Verschließen des Wandgehäuses sowie zwei Scharnierbolzen 30, von denen nur der obere dargestellt ist, angeordnet. Die Scharnierbolzen 30 stehen nach oben und unten über die Tür 9 über und sind vertikal verstellbar angeordnet und in einer Einbaustellung feststell- bzw. arretierbar. In einer zweckmäßigen konstruktiven Ausbildung sind die Scharnierbolzen 30 in einer Langlochführung (nicht dargestellt) aufgenommen, welche zweckmäßigerweise von der Innenseite der Tür 9 her zugänglich ist und das Verschieben und Arretieren des Scharnierbolzens 30 ermöglicht.

## Patentansprüche

1. Gehäusesystem, insbesondere für Wandgehäuse, mit einem Grundgestell (2), welches eine Rückwand (3), Einbaukonsolen (4) und Vertikalprofile (5) aufweist, und mit Verkleidungsteilen (6, 7, 8, 9), welche nach Einbau und Verkabelung von elektrischen Geräten und Komponenten an dem Grundgestell (2) fixierbar sind, wobei die Einbaukonsolen (4) zur direkten Befestigung an der Rückwand (3) ausgebildet sind,
**dadurch gekennzeichnet,**
**dass** die Einbaukonsolen (4) mit einem Befestigungselement (21) zum Einhängen oder Verrasten in Aufnahmeöffnungen (11) der Rückwand (3) versehen sind und
**dass** Befestigungsmittel sowie an der Rückwand (3) angeordnete Befestigungsöffnungen (14) und an den Einbaukonsolen (4) angeordnete Öffnungen (20) vorgesehen sind, durch welche die eingebauten Einbaukonsolen (4) sicherbar sind.

2. Gehäusesystem nach Anspruch 1,
**dadurch gekennzeichnet,**
**dass** die Einbaukonsolen (4) als U-Profile ausgebildet sind.

3. Gehäusesystem nach Anspruch 2,
**dadurch gekennzeichnet,**
**dass** die Rückwand (3) mit Verstärkungssicken (10) versehen ist und die Aufnahmeöffnungen (11) zum Einhängen der Einbaukonsolen (4) im Bereich der Verstärkungssikken (10) ausgebildet sind.

4. Gehäusesystem nach einem der vorhergehenden-Ansprüche,
**dadurch gekennzeichnet,**
**dass** die Vertikalprofile (5) für 19 Zoll-, metrische oder ETSI-Einbauten ausgebildet und an den Einbaukonsolen (4) fixierbar sind.

5. Gehäusesystem nach einem der vorhergehenden Ansprüche,
**dadurch gekennzeichnet,**
**dass** die Rückwand (3) als eine Grundplatte ausgebildet ist und Prägungen (12) für eine Schraubbefestigung an einer Wand und dergleichen aufweist.

6. Gehäusesystem nach einem der vorhergehenden Ansprüche,
**dadurch gekennzeichnet,**
**dass** die Rückwand (3) mit vertikalen Kantenbereichen (13) versehen ist und dass die vertikalen Kantenbereiche (13) als Anlageflächen ausgebildet sind, welche mit den Prägungen (12) eine Rückwandebene bilden.

7. Gehäusesystem nach einem der vorhergehenden Ansprüche,
**dadurch gekennzeichnet,**
**dass** die Rückwand (3) zur Anlage und/oder Halterung der Verkleidungsteile (6, 7, 8) mit Stegen (15) versehen ist und dass die Stege (15) als nahezu rechtwinklige und zum Aufnahmeraum gerichtete Abbiegungen ausgebildet sind.

8. Gehäusesystem nach einem der Ansprüche 3 bis 7,
**dadurch gekennzeichnet,**
**dass** in jeder Verstärkungssicke (10) der Rückwand (3) unterhalb bzw. oberhalb jeder Aufnahmeöffnung (11) für eine Einbaukonsole (4) als Befestigungsöffnung (14) eine Bohrung für eine Schraubbefestigung der eingehängten Einbaukonsole (4) vorgesehen ist.

9. Gehäusesystem nach einem der vorhergehenden Ansprüche,
**dadurch gekennzeichnet,**
**dass** als Verkleidungsteile (6, 7, 8, 9) ein Bodenteil (6), ein Deckenteil (7), zwei Seitenwände (8) und eine Tür (9) vorgesehen sind und dass die Verkleidungsteile (6, 7, 8, 9) zur gegenseitigen Anlage und Abdeckung von Befestigungsbereichen ein- und mehrfach abgewinkelte Kantenbereiche (16 bis 19, 28, 31, 32) aufweisen.

10. Gehäusesystem nach Anspruch 9,
**dadurch gekennzeichnet,**
**dass** das Bodenteil (6) und das Deckenteil (7) jeweils Seitenkantenbereiche (17) und einen frontseitigen Kantenbereich (16) aufweisen, welcher als horizontaler, nach innen gerichteter U-förmiger Profilbereich ausgebildet ist.

11. Gehäusesystem nach Anspruch 10,
**dadurch gekennzeichnet,**
**dass** die Einbaukonsolen (4) einen Aufnahmebereich (22) zum Aufschieben oder Aufstecken des Bodenteils (6) und Deckenteils (7) aufweisen und dass der frontseitige Kantenbereich (16) des Boden- und Deckenteils (6, 7) zum Aufschieben oder Aufstecken komplementär zu dem Aufnahmebereich (22) der Einbaukonsolen (4) ausgebildet ist.

12. Gehäusesystem nach einem der Ansprüche 9 bis 11,
**dadurch gekennzeichnet,**
**dass** an einem rückseitigen Kantenbereich (26) des Bodenteils (6) und des Deckenteils (7) Befestigungselemente (27) zum Aufschieben oder Aufstecken auf den oberen bzw. unteren Steg (15) der Rückwand (3) vorgesehen sind.

13. Gehäusesystem nach Anspruch 12,
**dadurch gekennzeichnet,**
**dass** als Befestigungselemente (27) wenigstens zwei Haken oder Klemmelemente an der Innenseite des Boden- bzw. Deckenteils (6, 7) befestigt sind.

14. Gehäusesystem nach einem der Ansprüche 9 bis 13,
**dadurch gekennzeichnet,**
**dass** die Tür (9) über zwei Bolzen (30) angelenkt ist und dass die Bolzen (30) zum Einbauen vertikal verschiebbar angeordnet und in Einbaustellung, in welcher sie unten und oben über die Tür (9) überstehen, feststellbar sind.

15. Gehäusesystem nach Anspruch 14,
**dadurch gekennzeichnet,**
**dass** die Bolzen (30) jeweils in einer Langlochführung der Tür, welche an der Innenseite der Tür (9) oder eines Längsprofils (31) der Tür (9) ausgebildet ist, geführt sind.

## Claims

1. Housing system, particularly for a wall housing, having a base frame (2), provided with a rear wall (3), built-in brackets (4) and vertical profiles (5), and with lining parts (6, 7, 8, 9), which following the mounting and cabling of electrical equipment and components can be fixed to the base frame (2), the built-in brackets (4) being constructed for direct fixing to the rear wall (3),
**characterized in**
**that** the built-in brackets (4) are provided with a fixing element (21) for fastening or locking in reception openings (11) of the rear wall (3) and
**that** fixing means are provided as well as fixing openings (14) located on the rear wall (3) and openings (20) located on the built-in brackets (4) through which the fitted built-in brackets (4) can be secured.

2. Housing system according to claim 1,
**characterized in**
**that** the built-in brackets (4) are constructed as U-sections.

3. Housing system according to claim 2,
**characterized in**
**that** the rear wall (3) is provided with reinforcing beads (10) and the reception openings (11) for fastening the built-in brackets (4) are formed in the area of the reinforcing beads (10).

4. Housing system according to one of the preceding claims,
**characterized in**
**that** the vertical profiles (5) are constructed for 19 inch, metric or ETSI components and can be fixed to the built-in brackets (4).

5. Housing system according to one of the preceding claims,
**characterized in**
**that** the rear wall (3) is constructed as a base plate and has embossings (12) for a screw fixture to a wall or the like.

6. Housing system according to one of the preceding claims,
**characterized in**
**that** the rear wall (3) is provided with vertical edge areas (13) and that the vertical edge areas (13) are constructed as contact surfaces, which with the embossings (12) form a rear wall plane.

7. Housing system according to one of the preceding claims,
**characterized in**
**that** the rear wall (3) is provided with webs (15) for an engagement and/or retention of the lining parts (6, 7, 8) and
**that** the webs (15) are constructed as virtually right-angled bends directed towards the reception space.

8. Housing system according to one of the claims 3 to 7,
**characterized in**
**that** in each reinforcing bead (10) of the rear wall (3) above or below each reception opening (11) for a built-in bracket (4) is provided as fixing opening (14) a bore for a screw fixture of the hung-in built-in bracket (4).

9. Housing system according to one of the preceding claims,
**characterized in**
**that** as lining parts (6, 7, 8, 9) are provided a bottom part (6), a top part (7), two side walls (8) and a door (9) and that the lining parts (6, 7, 8, 9) have singly and multiply bent edge areas (16 to 19, 28, 31, 32) for a mutual engagement covering of fixing areas.

10. Housing system according to claim 9,
**characterized in**
**that** the bottom part (6) and top part (7) in each case have lateral edge areas (17) and a front edge area (16), which is constructed as a horizontal, inwardly directed, U-shaped profile area.

11. Housing system according to claim 10,
**characterized in**
**that** the built-in brackets (4) have a reception area (22) for sliding or slipping on the bottom part (6) and top part (7) and that the front edge area (16) of the bottom part (6) and top part (7) is constructed for sliding or slipping on in complimentary manner to the reception area (22) of the built-in brackets (4).

12. Housing system according to one of the claims 9 to 11,
**characterized in**
on a rear edge area (26) of the bottom part (6) and top part (7) fastening elements (27) for sliding or slipping onto the upper or lower web (15) of the rear wall (3).

13. Housing system according to claim 12,
**characterized in**
**that** as fastening elements (27) at least two hooks or clamping elements are fixed to the inside of the bottom part (6) and top part (7).

14. Housing system according to one of the claims 9 to 13,
**characterized in**
**that** the door (9) is articulated by means of two pins (30) and that the pins for mounting purposes are arranged in vertically displaceable manner and can be secured in the mounting position, where they project downwards and upwards over the door (9).

15. Housing system according to claim 14,
**characterized in**
**that** the pins (30) are in each case guided in an elongated hole guide of the door, which is formed on the inside of said door (9) or of a longitudinal profile (31) of the door (9).

## Revendications

1. Système de boîtier, en particulier pour un boîtier mural, avec un châssis de base (2), qui présente une paroi arrière (3), des consoles de montage (4) et des profilés verticaux (5), et avec des éléments d'habillage (6, 7, 8, 9) qui peuvent être fixés au châssis de base (2) après installation et câblage d'appareils et composants électriques, les consoles de montage (4) étant conformées en vue d'une fixation directe sur la paroi arrière (3),
***caractérisé en ce que*** les consoles de montage (4) sont munies d'un élément de fixation (21) pour un accrochage ou un enclenchement dans des ouvertures de réception (11) de la paroi arrière (3), et ***en ce qu****'il* est prévu des moyens de fixation, ainsi que des ouvertures de fixation (14) placées sur la paroi arrière (3) et des ouvertures (20) placées sur les consoles de montage (4), à travers lesquelles les consoles de montage (4) peuvent être immobilisées.

2. Système de boîtier selon la Revendication 1, ***caractérisé en ce que*** les consoles de montage (4) sont conformées en profilés en U.

3. Système de boîtier selon la Revendication 2, ***caractérisé en ce que*** la paroi arrière (3) est munie de moulures de renforcement (10) et les ouvertures de réception (11) sont conformées en vue de l'accrochage des consoles de montage (4) au niveau des moulures de renforcement (10).

4. Système de boîtier selon l'une quelconque des Revendications précédentes, ***caractérisé en ce que*** les profilés verticaux (5) sont conformés pour des objets ETSI, métriques ou 19 pouces et peuvent être fixés sur les consoles de montage (4).

5. Système de boîtier selon l'une quelconque des Revendications précédentes, ***caractérisé en ce que*** la paroi arrière (3) est conformée en plaque de fond et présente des estampages (12) pour une fixation vissée contre un mur ou analogue.

6. Système de boîtier selon l'une quelconque des Revendications précédentes, ***caractérisé en ce que*** la paroi arrière (3) est munie de zones de bord verticales (13) et ***en ce que*** les zones de bord verticales (13) sont conformées en surface d'appui, qui forment un plan de paroi arrière avec les estampages (12).

7. Système de boîtier selon l'une quelconque des Revendications précédentes, ***caractérisé en ce que*** la paroi arrière (3) est munie de barres (15) pour l'appui et/ou le maintien des éléments d'habillage (6, 7, 8) et ***en ce que*** les barres (15) sont conformées en coudes approximativement perpendiculaires et dirigés vers l'espace de réception.

8. Système de boîtier selon l'une quelconque des Revendications 3 à 7, ***caractérisé en ce que*** dans chaque moulure de renforcement (10) de la paroi arrière (3), il est prévu au-dessus ou au-dessous de chaque ouverture de réception (11) pour une console de montage (4), en tant qu'ouverture de fixation (14), un perçage pour une fixation vissée de la console de montage (4) accrochée.

9. Système de boîtier selon l'une quelconque des Revendications précédentes, ***caractérisé en ce qu***'il est prévu comme éléments d'habillage (6, 7, 8, 9) un élément de fond (6), un élément de couverture (7), deux parois latérales (8) et une porte (9) et ***en ce que*** les éléments d'habillage (6, 7, 8, 9) présentent des zones de bord (16 à 19, 28, 31, 32) repliées une ou plusieurs fois pour l'appui et le recouvrement mutuel de zones de fixation.

10. Système de boîtier selon la Revendication 9, ***caractérisé en ce que*** l'élément de fond (6) et l'élément de couverture (7) présentent à chaque fois une partie de bord latéral (17) et une partie de bord avant (16), qui est conformée en zone de profilé en U horizontale dirigée vers l'intérieur.

11. Système de boîtier selon la Revendication 10, ***caractérisé en ce que*** les consoles de montage (4) présentent une zone de réception (22) pour enfoncer ou appliquer l'élément de fond (6) et l'élément de couverture (7) et ***en ce que*** la partie de bord avant (16) des éléments de fond et de couverture (6, 7) est conformée pour l'enfoncement ou l'application de manière complémentaire à la zone de réception (22) des consoles de montage (4).

12. Système de boîtier selon l'une quelconque des Revendications 9 à 11, ***caractérisé en ce que****,* sur une partie de bord arrière (26) de l'élément de fond (6) et de l'élément de couverture (7), il est prévu des éléments de fixation (27) pour un enfoncement ou une application sur la barre supérieure ou inférieure (15) de la paroi arrière (3).

13. Système de boîtier selon la Revendication 12, ***caractérisé en ce que****,* comme éléments de fixation (27), au moins deux crochets ou éléments de blocage sont fixés sur la face intérieure de l'élément de fond ou de l'élément de couverture (6, 7).

14. Système de boîtier selon l'une quelconque des Revendications 9 à 13, ***caractérisé en ce que*** la porte (9) est articulée au moyen de deux goujons (30) et ***en ce que*** les goujons (30) sont montés mobiles verticalement pour le montage et peuvent être immobilisés dans la position de montage dans laquelle ils dépassent de la porte (9) en haut et en bas.

15. Système de boîtier selon la Revendication 14, ***caractérisé en ce que*** les goujons (30) passent à chaque fois dans un guidage en trou allongé de la porte qui est formé sur la face intérieure de la porte (9) ou d'un profilé longitudinal (31) de la porte (9).
